# EUROPÄISCHE PATENTSCHRIFT

(11) **EP 1 222 234 B1**
(45) Veröffentlichungstag und Bekanntmachung des Hinweises auf die Patenterteilung: **09.04.2003**
(21) Anmeldenummer: 01900469.6
(22) Anmeldetag: 18.01.2001
(51) Int. Cl.: C09D 1/04, C04B 28/26

(54) **SILIKATISCHE BESCHICHTUNGSMASSE MIT VERBESSERTER STABILITÄT**
SILICATIC COATING MASS WITH IMPROVED STABILITY
MATIERE DE RECOUVREMENT SILICATIQUE A STABILITE AMELIOREE

(30) Priorität: 18.01.2000 DE 10001831
(43) Veröffentlichungstag der Anmeldung: 17.07.2002
(73) Patentinhaber: Keimfarben GmbH & Co. KG, 86420 Diedorf (DE)
(72) Erfinder: HEIBERGER, Franz, 86159 Augsburg (DE); SCHLÄFFER, Hermann, 86356 Neusäss (DE)
(74) Vertreter: HOFFMANN - EITLE
(86) Internationale Anmeldenummer: EP0100548
(87) Internationale Veröffentlichungsnummer: WO01053419

(56) Entgegenhaltungen:
- DE-A- 1 669 182
- DE-A- 1 943 114
- US-A- 5 908 501

## Beschreibung

Die Erfindung betrifft eine silikatische Beschichtungsmasse, ein Verfahren zu ihrer Herstellung, ihre Verwendung sowie ein mit der silikatischen Beschichtungsmasse beschichtetes Substrat.

Silikatische Beschichtungsmassen finden in der Technik eine Vielzahl von Anwendungen. Hierzu gehören das Aufbringen von Schutzbeschichtungen auf mineralischen Substraten, wie Kalkoder Kalkzementputzen und Beton, auf Kunststoffen wie PVC sowie auf metallischen Oberflächen aus Eisen oder Nichteisenmetallen. Zu den silikatischen Beschichtungsmassen gehören insbesondere die rein anorganischen Silikatfarben sowie die Dispersionssilikatfarben, die gemäß DIN 18 363 bis zu 5 Gew.% organische Anteile enthalten dürfen.

Diese silikatischen Beschichtungsmassen werden in der Praxis mit Pigmenten, Füllstoffen, Wasser und mit Wasserglas als Bindemittel formuliert. Unter Wasserglas werden glasartig erstarrte Schmelzen von Alkalisilikaten und deren wässrige Lösungen verstanden, die aus Alkalicarbonaten und SiO₂ erhältlich sind. Der Wasserglasbinder bewirkt die besonderen Eigenschaften von silikatischen Beschichtungsmassen. Durch Wasserverdunstung und der Reaktion mit Kohlendioxid wird die Beschichtungsmasse silifiziert, d.h. der Binder wird in ein wasserunlösliches silikatisches Netzwerk umgewandelt, das gegebenenfalls die Bestandteile des Untergrundes einbezieht. Hierdurch entsteht eine sehr harte Beschichtung mit einer hohen Gasdurchlässigkeit. Das verwendete Wasserglas wird im allgemeinen durch Zusammenschmelzen von Quarzsand mit Alkalicarbonat hergestellt. Dabei werden in der Regel Molverhältnisse von SiO₂ zu Alkalioxid, den beiden Hauptbestandteilen des Wasserglases, von maximal 4 eingestellt.

Beschichtungen, die aus silikatischen Beschichtungsmassen erhalten werden, die einen derartigen Wasserglasbinder einsetzen, weisen jedoch den Nachteil auf, dass sie bei Wassereinwirkung zu Alkaliauswaschung neigen, so dass helle Streifen, eine verringerte Bindung an den Untergrund und somit Kreidung, d.h. ein leichtes Abwischen von Partikeln, resultieren kann. Insbesondere bei chemischen Belastungen wie saurem Regen oder klimatischen Belastungen wie Frost-Tau-Wechsel erwiesen sich diese Beschichtungen als ungenügend stabil.

Für silikatische Beschichtungen, die Wasserglas mit einem höheren Molverhältnis von SiO₂ zu Alkalioxid enthalten, wurde eine erhöhte Stabilität gegenüber derartigen Belastungen festgestellt. Es war jedoch nicht möglich, eine lagerbeständige Beschichtungsmasse für solche Beschichtungen herzustellen, da silikatische Beschichtungsmassen, die Wasserglas mit einem Molverhältnis von SiO₂ zu Alkalioxid von > 4 enthalten, nicht stabil sind. Je höher der SiO₂-Gehalt, desto leichter kommt es zu Gelbildung und somit zur Verfestigung des Wasserglases. Dieses Problem wurde umgangen, indem Zwei- oder Mehrkomponenten-Systeme bereitgestellt wurden, deren Komponenten erst unmittelbar vor der Verwendung vermischt werden konnten. So beschreibt WO 95/29139 eine Silikatmasse, die einen Wasserglasbinder mit einem Molverhältnis Siliciumdioxid zu Alkalioxid von 4 bis 25 aufweist und außerdem Oxide aus der Gruppe Aluminiumoxid, Calciumoxid, Titandioxid, Magnesiumoxid, Zirkonoxid und/oder Boroxid enthält. Eine solche Silikatmasse besitzt jedoch eine hohe Reaktivität, so dass sie ausschließlich als Mehrkomponenten-System mit einer sehr kurzen Topfzeit im vermischten, einkomponentigen Zustand beschrieben ist. Insbesondere für die Anwendung im Anstrichbereich ist dies von Nachteil, da die Komponenten erst unmittelbar vor der von Nachteil, da die Komponenten erst unmittelbar vor der Anwendung vermischt werden können und dann schnell verarbeitet werden müssen.

Der Erfindung liegt daher die Aufgabe zugrunde, eine silikatische Beschichtungsmasse mit einem hohen Molverhältnis von Siliciumdioxid zu Alkalioxid bereitzustellen, die auch im einkomponentigen Zustand stabil ist und sich für den Anstrichbereich eignet.

Diese Aufgabe konnte überraschend durch eine silikatische Beschichtungsmasse gelöst werden, die Wasserglas oder eine Mischung aus Wasserglas und Kieselsol, in dem/der das molare Verhältnis von SiO₂ zu Alkalioxid 5 bis 30 Mol SiO₂ pro Mol Alkalioxid beträgt, eine oder mehrere organische Ammoniumverbindung(en) und einen oder mehrere Füllstoff(e) umfasst.

Eine silikatische Beschichtungsmasse, die Wasserglas oder eine Mischung aus Wasserglas und Kieselsol, in dem/der das molare Verhältnis von SiO₂ zu Alkalioxid 5 bis 30 Mol SiO₂ pro Mol Alkalioxid beträgt, und eine oder mehrere organische Ammoniumverbindung(en) enthält, weist eine hohe Lagerstabilität im gebrauchsfertigen, einkomponentigen Zustand auf. Sie besitzt in der Regel eine Lagerfähigkeit von mindestens 6 Monaten.

Vorzugsweise beträgt das molare Verhältnis von SiO₂ zu Alkalioxid im Wasserglas oder in der Mischung aus Wasserglas und Kieselsol 10-25 Mol SiO₂ pro Mol Alkalioxid, besonders bevorzugt 15-25 Mol SiO₂ pro Mol Alkalioxid.

Das Alkalioxid des Wasserglases der erfindungsgemäßen silikatischen Beschichtungsmasse ist vorzugsweise Kaliumoxid. Kaliumoxid ist bevorzugt, da es im Vergleich zu Natriumoxid weniger zum Ausblühen neigt und billiger als Lithiumoxid ist.

Das Alkalioxid ist vorzugsweise zu 0,5 bis 3 Gew.%, besonders bevorzugt zu 0,5 bis 0,8 Gew.%, bezogen auf das Gesamtgewicht der silikatischen Beschichtungsmasse, enthalten. Vor allem ist ein Gehalt an Alkalioxid von 0,5 Gew.% bevorzugt.

Die Bezugnahme auf Alkalioxide entspricht der in der Silikatanalyse üblichen Angabe von Metallgehalten als Oxide, auch wenn diese tatsächlich in Form chemischer Verbindungen wie Silikate oder dergleichen vorliegen.

Unter Kieselsol werden wässrige Lösungen kolloidaler Kieselsäure verstanden. Vorzugsweise wird ein alkalisches Kieselsol eingesetzt. Weiterhin ist ein Feststoffgehalt von 10 bis 50 % bevorzugt. Darüber hinaus weist das Kieselsol vorteilhafterweise eine mittlere Teilchengröße von < 10 nm auf. Die erfindungsgemäß verwendeten Kieselsole sind außerdem vorzugsweise durch ein sehr gleichmäßiges und feines Verteilungsspektrum gekennzeichnet.

Das Kieselsol kann in einem Anteil von 3 bis 30 Gew.%, bezogen auf das Gesamtgewicht der silikatischen Beschichtungsmasse, vorliegen.

Das Wasserglas, das ein molares Verhältnis von SiO₂ zu Alkalioxid von 5 bis 30 Mol SiO₂ pro Mol Alkalioxid aufweist, oder die Mischung aus Wasserglas und Kieselsol, die durch ein molares Verhältnis von SiO₂ zu Alkalioxid von 5 bis 30 Mol SiO₂ pro Mol Alkalioxid gekennzeichnet ist, wirken in der erfindungsgemäßen silikatischen Beschichtungsmasse als Binder.

Das Wasserglas oder die Mischung aus Wasserglas und Kieselsol, in dem/der das molare Verhältnis von SiO₂ zu Alkalioxid 5 bis 30 Mol SiO₂ pro Mol Alkalioxid beträgt, ist in der erfindungsgemäßen silikatischen Beschichtungsmasse vorzugsweise zu 3 bis 40 Gew.%, besonders bevorzugt zu 15 bis 35 Gew.%, bezogen auf das Gesamtgewicht der silikatischen Beschichtungsmasse, enthalten.

Die organische(n) Ammoniumverbindung(en) in der erfindungsgemäßen silikatischen Beschichtungsmasse weisen vorzugsweise die folgende Formel (I) auf:

⁺NR¹R²R³R⁴ X⁻ (I)

wobei R¹, R² und R³ jeweils unabhängig eine Alkylgruppe mit 1 bis 20 Kohlenstoffatomen, die gegebenenfalls mit einer funktionellen Gruppe substituiert sein kann, eine Arylgruppe mit 6 bis 20 Kohlenstoffatomen, die gegebenenfalls mit einer funktionellen Gruppe substituiert sein kann, oder Wasserstoff darstellen, R⁴ eine Alkylgruppe mit 1 bis 20 Kohlenstoffatomen, die gegebenenfalls mit einer funktionellen Gruppe substituiert sein kann, eine Arylgruppe mit 6 bis 20 Kohlenstoffatomen, die gegebenenfalls mit einer funktionellen Gruppe substituiert sein kann, Wasserstoff oder -(CH₂)ₓ-N⁺R⁵R⁶R⁷Y⁻ darstellt, wobei R⁵, R⁶ und R⁷ jeweils unabhängig eine Alkylgruppe mit 1 bis 20 Kohlenstoffatomen, die gegebenenfalls mit einer funktionellen Gruppe substituiert sein kann, eine Arylgruppe mit 6 bis 20 Kohlenstoffatomen, die gegebenenfalls mit einer funktionellen Gruppe substituiert sein kann, oder Wasserstoff darstellen, und wobei zumindest eines von R¹, R², R³ und R⁴ kein Wasserstoff ist, x eine Zahl zwischen 1 und 10 ist und X⁻ und Y⁻ jeweils gleich oder verschieden sein können und ein Anion darstellen. Die funktionelle Gruppe kann z.B. eine Hydroxygruppe, eine Aminogruppe, eine Aminoalkylgruppe mit 1 bis 6 Kohlenstoffatomen, eine Thiolgruppe oder eine Alkoxygruppe mit 1 bis 6 Kohlenstoffatomen, vorzugsweise eine Hydroxygruppe, sein. Die Wahl des Anions ist nicht beschränkt, sofern es die Wirkung der organischen Ammoniumverbindung nicht vermindert, z.B. kann das Anion F⁻, Cl⁻, Br⁻, I⁻ oder OH⁻ sein.

Besonders bevorzugt ist eine organische Ammoniumverbindung der Formel (II): 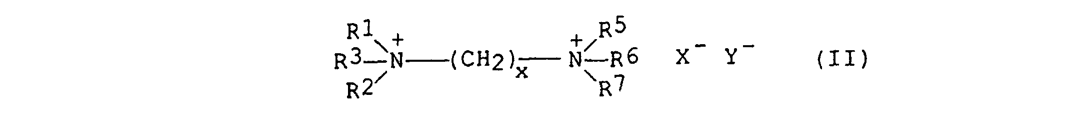 wobei R¹, R², R⁵ und R⁷ jeweils unabhängig eine Alkylgruppe mit 1 bis 20 Kohlenstoffatomen, eine Arylgruppe mit 6 bis 20 Kohlenstoffatomen oder Wasserstoff darstellen, R³ und R⁶ jeweils unabhängig eine Hydroxy-substituierte Alkylgruppe mit 1 bis 6 Kohlenstoffatomen sind, x eine Zahl zwischen 1 und 6 ist und X⁻ und Y⁻ gleich oder verschieden sein können und jeweils ein Anion, z.B. F⁻, Cl⁻, Br⁻, I⁻ oder OH⁻, darstellen.

Vorzugsweise enthalten die Alkylgruppen der Formeln (I) bzw. (II) 1 bis 6 Kohlenstoffatome, und ausgewählte Beispiele sind Methyl, Ethyl, Propyl, Isopropyl, n-Butyl, tert-Butyl, Pentyl, Hexyl sowie Cyclohexyl. Ausgewählte Beispiele für eine Hydroxy-substituierte Alkylgruppe mit 1 bis 6 Kohlenstoffatomen sind Hydroxymethyl, Hydroxyethyl, 1-Hydroxypropyl und 2-Hydroxypropyl.

Vor allem ist eine organische Ammoniumverbindung bevorzugt, bei der R¹, R², R⁵ und R⁷ jeweils eine Methylgruppe darstellen, R³ und R⁶ jeweils eine 2-Hydroxypropylgruppe sind, x = 6 ist und X⁻ und Y⁻ jeweils OH⁻ sind.

Der Gehalt der organischen Ammoniumverbindung(en) in der silikatischen Beschichtungsmasse beträgt vorzugsweise 0,1 bis 3 Gew.%, weiterhin bevorzugt 1 bis 3 Gew.% und besonders bevorzugt 1,5 bis 3 Gew.%, bezogen auf das Gesamtgewicht der silikatischen Beschichtungsmasse.

Die erfindungsgemäße silikatische Beschichtungsmasse umfasst einen oder mehrere Füllstoffe, vorzugsweise in einem Gehalt von 10 bis 45 Gew.%, bezogen auf das Gesamtgewicht der silikatischen Beschichtungsmasse. Quarzitische Füllstoffe, calcitische Füllstoffe, Schichtsilikate und/oder Feldspate können z.B. als Füllstoffe Anwendung finden.

Die erfindungsgemäße silikatische Beschichtungsmasse kann weiterhin ein Polymer enthalten. Polymerhaltige silikatische Beschichtungsmassen finden insbesondere als Dispersionssilikatfarben Anwendung. Der Zusatz eines Polymers bewirkt eine höhere Flexibilität der nach Silifizierung erhaltenen Beschichtung, welche insbesondere auf natürlichen Substraten und Polymersubstraten vorteilhaft ist. Nach der DIN-Vorschrift 18 363, Abs. 2.4.1 können Dispersionssilikatfarben maximal 5 % organische Anteile enthalten. Unabhängig von dieser DIN-Richtlinie ist jedoch ein Polymergehalt von bis zu 15 Gew.%, bezogen auf das Gesamtgewicht der silikatischen Beschichtungsmasse, insbesondere 1 bis 15 Gew.%, vorteilhaft. Besonders bevorzugt ist ein Polymergehalt von 3 bis 10 Gew.%. Das Polymer wird in der Regel in Form einer Dispersion in die silikatische Beschichtungsmasse eingearbeitet. Der Feststoffgehalt der Polymerdispersion beträgt vorzugsweise 20 bis 60 Gew.%. Vorzugsweise ist das Polymer ein (Meth)acrylat-Homopolymer oder -Copolymer. Besonders bevorzugt ist ein Butylacrylat-Methylmethacrylat-Copolymer oder ein Styrol-Acrylat-Copolymer.

Die silikatische Beschichtungsmasse kann weiterhin Oxide aus der Gruppe Aluminiumoxid, Calciumoxid, Titandioxid, Magnesiumoxid, Zirkonoxid und/oder Boroxid umfassen.

Außerdem können Pigmente zur Anpassung an eine gewünschte Farbe in der silikatischen Beschichtungsmasse enthalten sein. Vorteilhafterweise werden mineralische Oxide insbesondere Oxide mit Rutil- oder Spinellstruktur, wie z.B. Eisenoxide, verwendet. Die Pigmente sind vorzugsweise zu 5 bis 50 Gew.% in der silikatischen Beschichtungsmasse enthalten.

Weiterhin kann die silikatische Beschichtungsmasse als Zusätze z.B. Verdicker, Hydrophobierungsmittel, Dispergiermittel und/oder Entschäumer enthalten.

Beispiele für Verdicker sind Polysaccharide, Celluloseether und Bentonit. Ihr Gehalt kann 0,1 bis 5 Gew.%, bezogen auf das Gesamtgewicht der silikatischen Beschichtungsmasse, betragen.

Das Hydrophobierungsmittel kann z.B. Polysiloxane und insbesondere aminofunktionelle Polysiloxane umfassen. Das Hydrophobierungsmittel kann zu 0,1 bis 5 Gew.%, bezogen auf das Gesamtgewicht der silikatischen Beschichtungsmasse, vorliegen.

Als Dispergiermittel können z.B. Natrium- und Kaliumpolyacrylate zur Anwendung gelangen. Das Dispergiermittel liegt bevorzugt zu 0,1 bis 0,5 Gew.%, bezogen auf das Gesamtgewicht der silikatischen Beschichtungsmasse, vor.

Als Entschäumer können Mineral- und/oder Silikonöle in der silikatischen Beschichtungsmasse vorhanden sein. Die bevorzugt vorliegende Menge des Entschäumers beträgt 0,1 bis 1 Gew.%, bezogen auf das Gesamtgewicht der silikatischen Beschichtungsmasse.

Weiterhin kann die silikatische Beschichtungsmasse Wasser enthalten, vorzugsweise in einem Gehalt von 15 bis 50 Gew.%, bezogen auf das Gesamtgewicht der silikatischen Beschichtungszusammensetzung.

Obwohl die Vorteile der Erfindung bei einer einkomponentigen silikatischen Beschichtungsmasse besonders deutlich werden, ist auch die Aufspaltung der silikatischen Beschichtungsmasse in zwei Komponenten möglich. Vorzugsweise enthält dann eine Komponente den Füllstoff und gegebenenfalls weitere Zusätze wie Pigmente und die zweite Komponente enthält das Wasserglas oder die Mischung aus Wasserglas und Kieselsol, dessen/deren molares Verhältnis von SiO₂ zu Alkalioxid 5 bis 30 Mol SiO₂ pro Mol Alkalioxid beträgt, und die organische Ammoniumverbindung.

Die Herstellung der erfindungsgemäßen silikatischen Beschichtungsmasse kann durch Vermischen des Wasserglases oder der Mischung aus Wasserglas und Kieselsol, das/die ein Verhältnis von SiO₂ zu Alkalioxid von 5 bis 30 Mol SiO₂ pro Mol Alkalioxid aufweist, mit einer oder mehreren organischen Ammoniumverbindung(en) erfolgen, wobei der (die) Füllstoff(e) und gegebenenfalls weitere Zusätze wie Pigmente vor oder nach dem Vermischen des Wasserglases oder der Mischung aus Wasserglas und Kieselsol mit der organischen Ammoniumverbindung zugegeben werden. Wird ein Polymer zu der silikatischen Beschichtungsmasse gegeben, so wird dieses vorzugsweise vor dem Vermischen des Wasserglases oder der Mischung aus Wasserglas und Kieselsol mit der organischen Ammoniumverbindung in Form einer Polymerdispersion vorgelegt.

Im folgenden werden weitere Varianten zur Herstellung der erfindungsgemäßen silikatischen Beschichtungsmasse vorgestellt.

Die erfindungsgemäße silikatische Beschichtungsmasse kann hergestellt werden, indem zunächst der (die) Füllstoff(e) und gegebenenfalls die Pigmente in Wasser dispergiert werden, dann die organische(n) Ammoniumverbindung(en) und gegebenenfalls anschließend das Polymer in Form einer Dispersion hinzugefügt werden. Nach gutem Dispergieren wird das Wasserglas oder die Mischung aus Wasserglas und Kieselsol zugegeben, anschließend gegebenenfalls weitere Zusätze, z.B. Verdicker und/oder Hydrophobierungsmittel. Durch weiteres Rühren wird eine möglichst homogene Dispersion erhalten.

Alternativ lässt sich die erfindungsgemäße silikatische Beschichtungsmasse wie folgt herstellen:

Zunächst wird das Wasserglas oder die Mischung aus Wasserglas und Kieselsol mit der (den) organischen Ammoniumverbindung(en) vermischt. Hierzu werden gegebenenfalls Pigmente hinzugefügt. Anschließend werden der (die) Füllstoff(e) und gegebenenfalls eine Polymerdispersion eingerührt. Zuletzt erfolgt gegebenenfalls die Zugabe weiterer Zusätze, wie z.B. eines Verdickungsmittels und/oder eines Hydrophobierungsmittels.

Die erfindungsgemäße silikatische Beschichtungsmasse kann zur Beschichtung von Substraten Verwendung finden.

Vorteilhaft kann die erfindungsgemäße silikatische Beschichtungsmasse zum Schutz von Substraten vor Witterungseinflüssen Verwendung finden.

Die silikatische Beschichtungsmasse ist für alle Anwendungen, für die bisher Silikatfarben bzw. Dispersionssilikatfarben genutzt wurden, geeignet. Hierzu gehören neben Schutzbeschichtungen gegen Witterungseinflüsse auch Beschichtungen zur Erzielung von Dekorzwecken oder Verzierungen.

Die Erfindung beinhaltet weiterhin Substrate, die mit der erfindungsgemäßen silikatischen Beschichtungsmasse beschichtet sind. Beschichtete Substrate können erhalten werden, indem die erfindungsgemäße silikatische Beschichtungsmasse, beispielsweise durch Tauchen, Streichen, Rollen, Gießen oder Sprühen, auf ein Substrat aufgetragen wird und anschließend eine Silifizierung abläuft.

Bei den Substraten, auf die die erfindungsgemäße silikatische Beschichtungsmasse aufgebracht werden kann, handelt es sich vorzugsweise um mineralische Substrate, metallische Substrate, natürliche Substrate oder Kunststoffsubstrate.

Spezielle Beispiele für mineralische Substrate schließen Mörtel (siehe z.B. DIN 18555), Putze, z.B. Kalk- und Zementputze, Beton, Naturstein, z.B. Kalksandstein, und Mauerwerk ein.

Metallische Substrate sind z.B. verzinkte Oberflächen oder Aluminiumsubstrate.

Unter natürlichen Substraten werden z.B. cellulosehaltige Materialien (z.B. Papier, Pappe, Holz, holzhaltige Materialien wie Spanplatten), biologisch abbaubare Polymere (z.B. eiweiß- oder stärkehaltige Materialien) und textile Materialien (z.B. Baumwolle, Leinen) verstanden.

Besonders bevorzugte cellulosehaltige Materialien sind Holz und holzhaltige Materialien.

Bei Kunststoffsubstraten kann es sich z.B. um Poly(meth)acrylate, Polycarbonate, Polystyrole, Polyethylenglykole und/oder PVC handeln.

Substrate schließen auch mit einer Grundierung versehene Substrate ein. Eine Grundierung kann z.B. dazu dienen, die Haftung zwischen dem nichtgrundierten Substrat und der silikatischen Beschichtungsmasse bzw. der durch Auftragen und Silifizierung erhaltenen Beschichtung zu verbessern. Beispiele für Grundierungen, auf die die silikatische Beschichtungsmasse zur Herstellung eines beschichteten Substrates appliziert werden kann, schließen z.B. Grundierungen auf der Basis von gegebenenfalls modifizierten Polyorganosiloxanen ein.

Erfindungsgemäße beschichtete Substrate zeichnen sich durch die Vorteile einer hohen Wasserbeständigkeit, Haftung und Abriebfestigkeit aus. Diese Vorteile resultieren aus einer verringerten bzw. fehlenden Alkaliauswaschung, so dass die Beschichtung in ihrem ursprünglichen Zustand, d.h. dem Zustand zum Zeitpunkt der Beendigung der Silifizierung, verbleibt. Die Bildung von hellen Streifen (Kreidung), eine Zunahme der Porosität und eine damit verbundene verringerte Bindung der Beschichtung an das Substrat (Erosion der Beschichtung) wird wesentlich verzögert bzw. verhindert.

Die vorteilhaften Eigenschaften der erfindungsgemäßen Beschichtungszusammensetzung bzw. der erfindungsgemäßen beschichteten Substrate können mit folgenden Testverfahren nachgewiesen werden:

### 1. Test zur Prüfung der Wasserbeständigkeit (Frühwasserfestigkeit) :

Auf Faserzementplatten (z.B. Eterplan) werden zwei Aufzüge der zu prüfenden silikatischen Beschichtungsmasse in Folge aufgerakelt. Der erste Aufzug wird mit einer Breite von 80 mm und einer Länge von 430 mm, der zweite Aufzug mit einer Breite von 60 mm und einer Länge von ebenfalls 430 mm aufgetragen. Der Zeitabstand zwischen den Aufzügen beträgt mindestens 12 Stunden, die Spalthöhe des Rakels beträgt 225 µm. Die Faserzementplatten, die Beschichtungszusammensetzung und die beschichteten Platten werden bei Normklima (23°C, 50% relative Luftfeuchtigkeit) gelagert. Vier Stunden nach Aufbringen des zweiten Aufzuges werden mit Hilfe einer Bürette 50 ml vollentsalztes Wasser auf die Beschichtungsoberfläche aufgetropft. Die Bürette wird so eingestellt, dass die 50 ml Wasser innerhalb von 10 Minuten aufgetropft werden. Die Probenoberfläche wird zur Bürette in einem Winkel von 135° angeordnet. Die Proben werden nach vollständigem Abtrocknen der Oberfläche, in der Regel nach 24 Stunden, begutachtet. Je nach Intensität der Ablaufspur unterscheidet man:
- Klasse 0:: kein Abläufer sichtbar
- Klasse 1:: sichtbarer Abläufer
- Klasse 2:: stark sichtbarer Abläufer
- Klasse 3:: Anstrich wird ausgewaschen

### 2. Test zur Prüfung der Haftung (Haftzugfestigkeit) (in Anlehnung an DIN 18 555 Teil 6):

Die silikatische Beschichtungsmasse wird auf Betonplatten der Festigkeitsklasse B 55 nach DIN 1045, die eine Abreissfestigkeit von mindestens 3 N/mm² aufweisen, aufgebracht. Die fertig gestellten Proben werden bei Normklima (23°C, 50% relative Luftfeuchtigkeit) mindestens 14 Tage gelagert. Die Messung der Haftzugfestigkeit wird gemäß DIN 18 555 Teil 6, Punkt 5 mit einer Belastungsgeschwindigkeit von 100 N/s durchgeführt.

### 3. Test zur Prüfung der Abriebfestigkeit (Wasch- und Scheuerbeständigkeit) (in Anlehnung an DIN 53 778, Teil 2):

In Abweichung von der DIN Norm werden die folgenden Substrate verwendet und die Beschichtung wie nachstehend beschrieben hergestellt. Auf Faserzementplatten (z.B. Eterplan) werden zwei Aufzüge der Beschichtungszusammensetzung in Folge aufgerakelt. Der erste Aufzug wird mit einer Breite von 80 mm und einer Länge von 430 mm, der zweite Aufzug mit einer Breite von 60 mm und einer Länge von ebenfalls 430 mm aufgetragen. Der Zeitabstand zwischen den Aufzügen sollte mindestens 12 Stunden betragen, die Spalthöhe des Rakels beträgt 225 µm. Die Faserzementplatten, die Beschichtungszusammensetzung und die beschichteten Substrate werden bei Normklima (23°C, 50% relative Luftfeuchtigkeit) gelagert. Der weitere Prüfungsablauf erfolgt nach DIN 53 778 Teil 2.

Die erfindungsgemäßen silikatischen Beschichtungsmassen zeigen während einer 6-monatigen Lagerzeit in bezug auf die Streichbarkeit und Spritzfähigkeit keinen erkennbaren Unterschied zu den bislang bekannten Dispersionssilikatfarben.

Die beschichteten Substrate, die durch Auftragen und Silifizieren der erfindungsgemäßen Beschichtungszusammensetzungen erhalten werden, sind durch eine hohe Stabilität gegenüber chemischen Einflüssen, wie saurer Regen, und klimatische Einflüsse, wie Frost-Tau-Wechsel, gekennzeichnet.

Im folgenden wird die Erfindung anhand der Beispiele näher erläutert:

### Beispiel 1:

Eine Mischung aus 3,8 Gew.% einer 30%igen Kaliwasserglaslösung und 17 Gew.-% eines Kieselsols mit einer Partikelgröße von 9 nm und einem Feststoffgehalt von 20%, die ein Molverhältnis von SiO₂ zu Kalioxid von 10 Mol SiO₂ pro Mol Kalioxid aufweist, wird mit 1,5 Gew.% (CH₃)₂[CH₃CH(OH)CH₂]N⁺-(CH₂)₆-⁺N(CH₃)₂[CH₂CH(OH)CH₃]OH⁻OH⁻ (N,N'-Di(2-hydroxypropyl)-N,N'-tetramethylhexylendiamin, 20%ige wässrige Lösung) vermischt. Nach Zugabe von 10,5 Gew.% Eisenoxid wird 5 Minuten gerührt. Anschließend werden 29,3 Gew.% Schichtsilikatgemenge (Kaolinit, Chlorit, Muskovit) und 6,0 Gew.% Butylacrylat-Methylmethacrylat-Copolymer (als 50%ige Dispersion) eingerührt, so dass sich eine homogene Dispersion bildet. Nach Zugabe von 0,2 Gew.% Bentonit, 0,1 Gew.% Xanthan und 1,5 Gew.% einer wässrigen aminofunktionellen Polydimethylsiloxanemulsion (Feststoffgehalt 50%) (Wacker BS 1306) wird mit 30,1 Gew.% Wasser verarbeitungsfertig eingestellt. Die erhaltene silikatische Beschichtungsmasse wird zur Beschichtung eines Betonsubstrates eingesetzt.

Das beschichtete Substrat ist durch eine Frühwasserfestigkeit der Klasse 0, eine Haftzugfestigkeit von 3-4 N/mm² und eine Wasch- und Scheuerbeständigkeit von > 10.000 Zyklen gekennzeichnet.

### Beispiel 2:

35 Gew.% einer 18%igen Kaliwasserglaslösung mit einem Molverhältnis SiO₂/Kalioxid von 6 werden mit 0,5 Gew.% N,N'-Di(2-hydroxypropyl)-N,N'-tetramethylhexylendiamin (20%ige wässrige Lösung) vermischt. 13,95 Gew.% Kaliumaluminiumsilikat, 9 Gew.% Calciumcarbonat, 8 Gew.% dehydratisiertes Aluminiumsilikathydrat, 4 Gew.% Calciumfluorid und 0,4 Gew.% Siliciumdioxid als Füllstoffe sowie 7,5 Gew.% einer wässrigen Dispersion eines Methylmethacrylat-Butylacrylat-Copolymers (Feststoffgehalt 50%) werden eingerührt, so dass eine homogene Dispersion entsteht. Nach der Zugabe von 1 Gew.% einer wässrigen Aminoalkylpolydimethylsiloxanemulsion (Feststoffgehalt 50%)(Wacker BS 1306), 0,25 Gew. % Tetranatrium-N-(1,2-dicarboxyethyl)-N-alkylsulfosuccinamid, 0,2 Gew. % einer Mischung aus hydrophober Kieselsäure, flüssigen Kohlenwasserstoffen, nichtionogenen Emulgatoren und synthetischen Copolymeren (Agitan 281), 0,125 Gew.% Xanthan und 0,1 Gew.% Natriumcarboxymethylcellulose wird mit 19,975 Gew.% Wasser verarbeitungsfertig eingestellt. Die erhaltene silikatische Beschichtungsmasse wird zur Beschichtung eines mineralischen Substrates (Kalkzementputz) eingesetzt.

### Beispiel 3:

22 Gew.% eines Füllstoffes (Chlorit-Quarz-Glimmer-Verwachsung) werden in 28,6 Gew.% Wasser dispergiert. 2 Gew.% (N,N'-Di(2-hydroxypropyl)-N,N'-tetramethylhexylendiamin (20%ige wässrige Lösung) werden hinzugefügt. Anschließend werden 9 Gew.% einer wässrigen Dispersion eines Butylacrylat-Methylmethacrylat-Copolymers (Feststoffgehalt 50 %) zugegeben. Eine Mischung aus 20 Gew.% Kieselsol (Teilchengröße 7-8 nm, Feststoffgehalt 30 %) und 6 Gew.% einer 21%igen Kaliwasserglaslösung (Molverhältnis SiO₂/Kalioxid = 10) werden eingerührt. Nach Dispergieren der genannten Komponenten werden 10 Gew.% einer Polysaccharidlösung (Feststoffgehalt 5 %) zugefügt. Als weitere Zusätze werden 2 Gew.% einer wässrigen Emulsion eines aminoalkylsubstituierten Polydimethylsiloxans (Wacker BS 1306) (Feststoffgehalt 50%), 0,2 Gew.% Tetranatrium-N-(1,2-dicarboxyethyl)-N-alkylsulfosuccinamid und 0,2 Gew.% einer Mischung aus hydrophober Kieselsäure, flüssigen Kohlenwasserstoffen, nichtionogenen Emulgatoren und synthetischen Copolymeren (Agitan 281) zugesetzt und gerührt bis eine möglichst homogene Dispersion erhalten wird. Die hergestellte silikatische Beschichtungsmasse wird zur Beschichtung eines Natursteinsubstrates (Sandstein) eingesetzt.

### Beispiel 4:

19 Gew.% einer wässrige Dispersion eines (Meth)acrylsäure-Copolymers (Feststoffgehalt 50%) wird vorgelegt. Eine Mischung aus 6 Gew.% einer 21%igen Kaliwasserglaslösung und 10 Gew.% Kieselsol (Feststoffgehalt 30%, mittlere Teilchengröße 7-8 nm) (Molverhältnis SiO₂/Kalioxid = 10) werden mit 1 Gew.% N'N-Di(2-hydroxypropyl)-N,N'tetramethylhexylendiamin vermischt und zur Copolymerdispersion gegeben. Anschließend werden 22 Gew.% eines Füllstoffes (Chlorit-Quarz-Glimmer-Verwachsung), 10 Gew.% einer 5%igen Polysaccharidlösung, 2 Gew.% einer wässrigen Emulsion eines aminoalkylgruppenhaltigen Polydimethylsiloxans (Wacker BS 1306) (Feststoffgehalt 50%), 0,2 Gew. % Tetranatrium-N-(1,2-dicarboxyethyl)-N-alkylsulfosuccinamid und 0,2 Gew. % einer Mischung aus hydrophober Kieselsäure, flüssigen Kohlenwasserstoffen, nichtionogenen Emulgatoren und synthetischen Copolymeren (Agitan 281) zugesetzt und mit 29,6 Gew.% Wasser aufgefüllt. Die erhaltene silikatische Beschichtungsmasse wird zur Beschichtung eines Mischuntergrundes, der organische Fasern enthält, (Holzfaserzementsubstrat) eingesetzt.

## Patentansprüche

1. Silikatische Beschichtungsmasse umfassend
- Wasserglas oder eine Mischung aus Wasserglas und Kieselsol, in dem/der das molare Verhältnis von SiO₂ zu Alkalioxid 5 bis 30 Mol SiO₂ pro Mol Alkalioxid beträgt,
- eine oder mehrere organische Ammoniumverbindung(en) und
- einen oder mehrere Füllstoff(e).

2. Silikatische Beschichtungsmasse gemäß Anspruch 1, **dadurch gekennzeichnet, dass** das molare Verhältnis von SiO₂ zu Alkalioxid 10 bis 25 Mol SiO₂ pro Mol Alkalioxid beträgt.

3. Silikatische Beschichtungsmasse gemäß Anspruch 2, **dadurch gekennzeichnet, dass** das molare Verhältnis von SiO₂ zu Alkalioxid 15 bis 25 Mol SiO₂ pro Mol Alkalioxid beträgt.

4. Silikatische Beschichtungsmasse gemäß einem oder mehreren der vorhergehenden Ansprüche, **dadurch gekennzeichnet, dass** das Alkalioxid Kaliumoxid ist.

5. Silikatische Beschichtungsmasse gemäß einem oder mehreren der vorhergehenden Ansprüche, **dadurch gekennzeichnet, dass** das Kieselsol eine mittlere Teilchengröße von < 10 nm aufweist.

6. Silikatische Beschichtungsmasse gemäß einem oder mehreren der vorhergehenden Ansprüche, **dadurch gekennzeichnet, dass** die organische(n) Ammoniumverbindung(en) die folgende Formel (I) aufweisen:
⁺NR¹R²R³R⁴ X⁻ (I)
wobei R¹, R² und R³ jeweils unabhängig eine Alkylgruppe mit 1 bis 20 Kohlenstoffatomen, die gegebenenfalls mit einer funktionellen Gruppe substituiert sein kann, eine Arylgruppe mit 6 bis 20 Kohlenstoffatomen, die gegebenenfalls mit einer funktionellen Gruppe substituiert sein kann, oder Wasserstoff darstellen, R⁴ eine Alkylgruppe mit 1 bis 20 Kohlenstoffatomen, die gegebenenfalls mit einer funktionellen Gruppe substituiert sein kann, eine Arylgruppe mit 6 bis 20 Kohlenstoffatomen, die gegebenenfalls mit einer funktionellen Gruppe substituiert sein kann, Wasserstoff oder -(CH₂)ₓ-N⁺R⁵R⁶R⁷Y⁻ darstellt, wobei R⁵, R⁶ und R⁷ jeweils unabhängig eine Alkylgruppe mit 1 bis 20 Kohlenstoffatomen, die gegebenenfalls mit einer funktionellen Gruppe substituiert sein kann, eine Arylgruppe mit 6 bis 20 Kohlenstoffatomen, die gegebenenfalls mit einer funktionellen Gruppe substituiert sein kann, oder Wasserstoff darstellen, und wobei zumindest eines von R¹, R², R³ und R⁴ kein Wasserstoff ist, x eine Zahl zwischen 1 und 10 ist, und X⁻ und Y⁻ gleich oder verschieden sein können und jeweils ein Anion darstellen.

7. Silikatische Beschichtungsmasse gemäß Anspruch 6, **dadurch gekennzeichnet, dass** die organische Ammoniumverbindung eine Verbindung der folgenden Formel (II) ist: 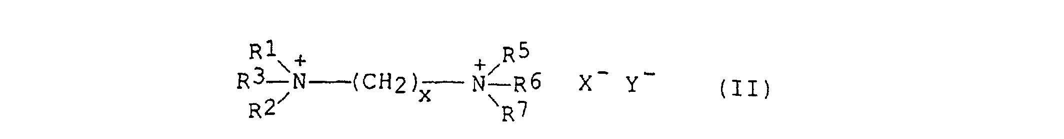 wobei R¹, R², R⁵ und R⁷ jeweils unabhängig eine Alkylgruppe mit 1 bis 20 Kohlenstoffatomen, eine Arylgruppe mit 6 bis 20 Kohlenstoffatomen oder Wasserstoff darstellen, R³ und R⁶ jeweils unabhängig eine Hydroxy-substituierte Alkylgruppe mit 1 bis 6 Kohlenstoffatomen sind, x eine Zahl zwischen 1 und 6 ist und X⁻ und Y⁻ gleich oder verschieden sein können und jeweils ein Anion darstellen.

8. Silikatische Beschichtungsmasse gemäß Anspruch 7, **dadurch gekennzeichnet, dass** R¹, R², R⁵ und R⁷ jeweils eine Methylgruppe darstellen, R³ und R⁶ jeweils eine 2-Hydroxypropylgruppe sind, x = 6 ist und X⁻ und Y⁻ jeweils OH darstellen.

9. Silikatische Beschichtungsmasse gemäß einem oder mehreren der vorhergehenden Ansprüche, **dadurch gekennzeichnet, dass** sie weiterhin ein Polymer umfasst.

10. Silikatische Beschichtungsmasse gemäß Anspruch 9, **dadurch gekennzeichnet, dass** das Polymer ein (Meth)acrylat-Homopolymer oder -Copolymer ist.

11. Verfahren zur Herstellung einer silikatischen Beschichtungsmasse gemäß einem oder mehreren der Ansprüche 1 bis 10, **dadurch gekennzeichnet, dass** das Wasserglas oder die Mischung aus Wasserglas und Kieselsol, das/die ein Verhältnis von 5 bis 30 Mol SiO₂ pro Mol Alkalioxid aufweist, und die organische(n) Ammoniumverbindung(en) vermischt werden, der (die) Füllstoff(e) und gegebenenfalls weitere Zusätze vor oder nach dem Vermischen des Wasserglases oder der Mischung aus Wasserglas und Kieselsol mit der (den) organischen Ammoniumverbindung(en) zugegeben werden und gegebenenfalls mit Wasser verarbeitungsfähig eingestellt wird.

12. Verwendung einer silikatischen Beschichtungsmasse gemäß einem oder mehreren der Ansprüche 1 bis 10 zur Beschichtung von Substraten.

13. Beschichtetes Substrat, erhältlich durch Auftragen der silikatischen Beschichtungsmasse gemäß einem oder mehreren der Ansprüche 1 bis 10 auf ein Substrat und anschließende Silifizierung.

## Claims

1. Silicate coating composition comprising
- water glass or a mixture of water glass and silica sol, in which the molar ratio of SiO₂ to alkali metal oxide is 5 to 30 moles of SiO₂ per mole of alkali metal oxide,
- one or more organic ammonium compound(s) and
- one or more filler(s).

2. Silicate coating composition according to claim 1, **characterised in that** the molar ratio of SiO₂ to alkali metal oxide is 10 to 25 moles of SiO₂ per mole of alkali metal oxide.

3. Silicate coating composition according to claim 2, **characterised in that** the molar ratio of SiO₂ to alkali metal oxide is 15 to 25 moles of SiO₂ per mole of alkali metal oxide.

4. Silicate coating composition according to one or more of the preceding claims, **characterised in that** the alkali metal oxide is potassium oxide.

5. Silicate coating composition according to one or more of the preceding claims, **characterised in that** the silica sol has an average particle size of < 10 nm.

6. Silicate coating composition according to one or more of the preceding claims, **characterised in that** the organic ammonium compound(s) have the following formula (I):
⁺NR¹R²R³R⁴ X⁻ (I)
wherein R¹, R² and R³ represent in each case independently an alkyl group having 1 to 20 carbon atoms, which may optionally be substituted by a functional group, an aryl group having 6 to 20 carbon atoms, which may optionally be substituted by a functional group, or hydrogen, R⁴ represents an alkyl group having 1 to 20 carbon atoms, which may optionally be substituted by a functional group, an aryl group having 6 to 20 carbon atoms, which may optionally be substituted by a functional group, hydrogen or -(CH₂)ₓ-N⁺R⁵R⁶R⁷Y⁻, wherein R⁵, R⁶ and R⁷ represent in each case independently an alkyl group having 1 to 20 carbon atoms, which may optionally be substituted by a functional group, an aryl group having 6 to 20 carbon atoms, which may optionally be substituted by a functional group, or hydrogen, and wherein at least one of R¹, R², R³ and R⁴ is not hydrogen, x is a number between 1 and 10, and X⁻ and Y⁻ may be the same or different and in each case represent an anion.

7. Silicate coating composition according to claim 6, **characterised in that** the organic ammonium compound is a compound of the following formula (II): 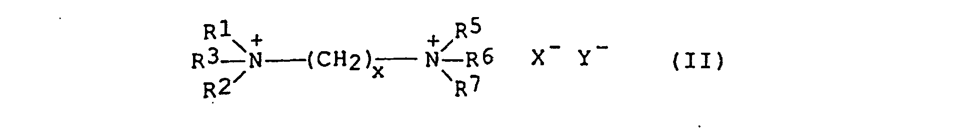 wherein R¹, R², R⁵ and R⁷ represent in each case independently an alkyl group having 1 to 20 carbon atoms, an aryl group having 6 to 20 carbon atoms or hydrogen, R³ and R⁶ are in each case independently a hydroxy-substituted alkyl group having 1 to 6 carbon atoms, x is a number between 1 and 6 and X⁻ and Y⁻ may be the same or different and in each case represent an anion.

8. Silicate coating composition according to claim 7, **characterised in that** R¹, R², R⁵ and R⁷ represent in each case a methyl group, R³ and R⁶ are in each case a 2-hydroxy-propyl group, x = 6 and X⁻ and Y⁻ in each case represent OH.

9. Silicate coating composition according to one or more of the preceding claims, **characterised in that** it also includes a polymer.

10. Silicate coating composition according to claim 9, **characterised in that** the polymer is a (meth)acrylate homopolymer or copolymer.

11. Process for producing a silicate coating composition according to one or more of claims 1 to 10, **characterised in that** the water glass or the mixture of water glass and silica sol, which has a ratio of 5 to 30 moles of SiO₂ per mole of alkali metal oxide, and the organic ammonium compound(s) are mixed, the filler(s) and optionally further additives are added before or after mixing the water glass or the mixture of water glass and silica sol with the organic ammonium compound(s) and is adjusted to be processable optionally using water.

12. Use of a silicate coating composition according to one or more of claims 1 to 10 for coating substrates.

13. Coated substrate which can be obtained by applying the silicate coating composition according to one or more of claims 1 to 10 to a substrate and subsequent silicification.

## Revendications

1. Matière de revêtement silicatique comprenant :
- du verre soluble ou un mélange de verre soluble et d'un sol de silice, dans lequel le rapport molaire du SiO₂ à l'oxyde alcalin est de 5 à 30 moles SiO₂ par mole d'oxyde alcalin,
- un ou plusieurs composés organiques de l'ammonium, et
- une ou plusieurs charges.

2. Matière de revêtement silicatique selon la revendication 1, **caractérisée en ce que** le rapport molaire du SiO₂ à l'oxyde alcalin est de 10 à 25 moles SiO₂ par mole d'oxyde alcalin.

3. Matière de revêtement silicatique selon la revendication 2, **caractérisée en ce que** le rapport molaire du SiO₂ à l'oxyde alcalin est de 15 à 25 moles SiO₂ par mole d'oxyde alcalin.

4. Matière de revêtement silicatique selon l'une ou plusieurs des revendications précédentes, **caractérisée en ce que** l'oxyde alcalin est de l'oxyde de potassium.

5. Matière de revêtement silicatique selon l'une ou plusieurs des revendications précédentes, **caractérisée en ce que** le sol de silice présente une granulométrie moyenne < 10 nm.

6. Matière de revêtement silicatique selon l'une ou plusieurs des revendications précédentes, **caractérisée en ce que** le ou les composés organiques de l'ammonium présentent la formule (I) suivante :
⁺NR¹R²R³R⁴X⁻ (I)
où R¹, R² et R³ représentent chaque fois indépendamment, un groupe alkyle ayant 1 à 20 atomes de carbone, qui peut être le cas échéant, substitué par un groupe fonctionnel, un groupe aryle ayant 6 à 20 atomes de carbone, qui peut être le cas échéant, substitué par un groupe fonctionnel, ou hydrogène, R⁴ représente un groupe alkyle ayant 1 à 20 atomes de carbone, qui peut être le cas échéant, substitué par un groupe fonctionnel, un groupe aryle ayant 6 à 20 atomes de carbone, qui peut être le cas échéant, substitué par un groupe fonctionnel, hydrogène ou - (CH₂)ₓ-N⁺R⁵R⁶R⁷Y⁻, où R⁵, R⁶ et R⁷ représentent chaque fois indépendamment, un groupe alkyle ayant 1 à 20 atomes de carbone, qui peut être le cas échéant, substitué par un groupe fonctionnel, un groupe aryle ayant 6 à 20 atomes de carbone, qui peut être le cas échéant, substitué par un groupe fonctionnel, ou hydrogène, et où au moins l'un parmi R¹, R², R³ et R⁴ n'est pas hydrogène, x est un nombre compris entre 1 et 10 et X⁻ et Y⁻ peuvent être identiques ou différents et représentent chaque fois, un anion.

7. Matière de revêtement silicatique selon la revendication 6, **caractérisée en ce que** le composé organique de l'ammonium est un composé de la formule (II) suivante : 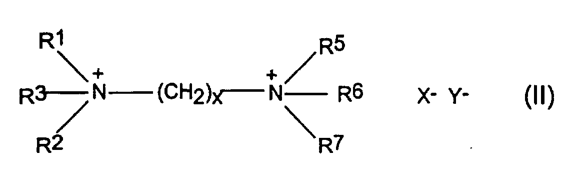 où R¹, R², R⁵ et R⁷ représentent chaque fois indépendamment, un groupe alkyle ayant 1 à 20 atomes de carbone, un groupe aryle ayant 6 à 20 atomes de carbone, ou hydrogène, R³ et R⁶ représentent chaque fois indépendamment, un groupe alkyle hydroxy-substitué, ayant 1 à 6 atomes de carbone, x est un nombre compris entre 1 et 6 et X⁻ et Y⁻ peuvent être identiques ou différents et représentent chaque fois, un anion.

8. Matière de revêtement silicatique selon la revendication 7, **caractérisée en ce que** R¹, R², R⁵ et R⁷ représentent chaque fois un radical méthyle, R³ et R⁶ représentent chaque fois un radical 2-hydroxypropyle, x est égal à 6 et X⁻ et Y⁻ représentent chaque fois OH.

9. Matière de revêtement silicatique selon l'une ou plusieurs des revendications précédentes, **caractérisée en ce qu'**elle comprend en outre, un polymère.

10. Matière de revêtement silicatique selon la revendication 9, **caractérisée en ce que** le polymère est un homopolymère ou copolymère de (méth)acrylate.

11. Procédé de préparation d'une matière de revêtement silicatique selon l'une ou plusieurs des revendications 1 à 10, **caractérisé en ce que** le verre soluble ou le mélange de verre soluble et de sol de silice, qui présente un rapport molaire de 5 à 30 moles de SiO₂ par mole d'oxyde alcalin, et le ou les composés organiques de l'ammonium sont mélangés, que l'on ajoute la ou les charges et le cas échéant, d'autres additifs avant ou après le mélange du verre soluble ou du mélange de verre soluble et de sol de silice, avec le ou les composés organiques de l'ammonium et que, le cas échéant, on ajuste avec de l'eau en vue du traitement.

12. Utilisation d'une matière de revêtement silicatique selon l'une ou plusieurs des revendications 1 à 10, pour le revêtement de substrats.

13. Substrat revêtu, obtenu par l'application sur un substrat de la matière de revêtement silicatique selon l'une ou plusieurs des revendications 1 à 10, et par silification subséquente.
